# EUROPÄISCHE PATENTSCHRIFT

(11) **EP 0 454 825 B1**
(45) Veröffentlichungstag und Bekanntmachung des Hinweises auf die Patenterteilung: **13.01.1999**
(21) Anmeldenummer: 90917202.5
(22) Anmeldetag: 10.11.1990
(51) Int. Cl.: C08F 220/68, C09D 133/00

(54) **UV-HÄRTENDER BESCHICHTUNGSSTOFF UND DESSEN VERWENDUNG FÜR PORÖSE UND/ODER SAUGENDE UNTERGRÜNDE**
UV-CURING COATING MATERIAL AND ITS USE FOR POROUS AND/OR ABSORBENT SUBSTRATES
MATIERE D'ENDUCTION DURCISSANT AUX UV ET SON UTILISATION POUR SUBSTRATS POREUX ET/OU ABSORBANTS

(30) Priorität: 16.11.1989 DE 3938149
(43) Veröffentlichungstag der Anmeldung: 06.11.1991
(73) Patentinhaber: HÜTTENES-ALBERTUS-LACKROHSTOFF GmbH, D-40459 Düsseldorf (DE)
(72) Erfinder: VAN SANDE, Jan, D-4060 Viersen 12 (DE); HELLWIG, Jürgen, D-3320 Salzgitter 1 (DE); PINKOWSKI, Uwe, D-5600 Wuppertal 2 (DE)
(74) Vertreter: Eikenberg, Kurt-Rudolf, Dr. Dipl.-Chem.
(86) Internationale Anmeldenummer: DE9000877
(87) Internationale Veröffentlichungsnummer: WO9107450

(56) Entgegenhaltungen:
- CH-A- 432 698
- DE-A- 2 709 981
- GB-A- 723 115

## Beschreibung

UV-härtende Bindemittel haben im allgemeinen mit Rücksicht auf die erstrebte hohe Reaktivität meist auch ein hohes Molekulargewicht und damit eine hohe Viskosität. Um sie verarbeiten zu können, werden sie in der Regel weiter verdünnt. Will man jedoch lösungsmittelarm oder lösungsmittelfrei arbeiten, so werden zur Erniedrigung der Viskosität coreaktive Monomere als sog. Reaktivverdünner eingesetzt, die durchweg gesundheitsgefährdend sind.

Obwohl die bekannten UV-härtenden Beschichtungsstoffe zur Herstellung von hochwertigen Überzügen geeignet sind, zeigen sie aufgrund ihrer Molekulargröße trotz der Verdünnung bezüglich ihrer Penetrationsfähigkeit für bestimmte Anwendungsfälle nicht das gewünschte anwendungstechnische Verhalten.

Aus der DE-A-27 09 981 ist ein Substanztyp ("Komponente A₂") bekannt, der als Bestandteil eines Mischpolymerisats für Überzugsmittel (für Einbrennlacke) Verwendung findet. Eine Substanz dieses Typs ist erhältlich aus
- dem Ester einer olefinisch ungesättigten Fettsäure mit ein- oder mehrwertigen Alkoholen,
- Maleinsäureanhydrid und
- einem ggfs. in dem Alkylrest substituierten Hydroxyalkylester einer copolymerisierbaren α,β-äthylenisch ungesättigten Monocarbonsäure mit 3 - 5 C-Atomen.

Aus der GB-A-723 115 ist ein Veresterungs-Zwischenprodukt aus einem Maleinsäureanhydrid-Öl-Addukt und einem Alkohol bekannt.

Die Aufgabe der vorliegenden Erfindung bestand darin, einen UV-härtenden Beschichtungsstoff mit hohem Festkörpergehalt anzugeben. Dieser Beschichtungsstoff sollte frei sein von Monomeren und ein hohes Penetrationsvermögen besitzen. Er sollte die Holzstruktur betonen, ohne die Holzmaserung durch Lackfilme zu verdecken und nach seiner Applikation sollte das Aussehen einer natürlichen Holzoberfläche weitgehend beibehalten werden. Ferner sollte Wert auf eine sofortige Stapelbarkeit der beschichteten Gegenstände nach erfolgter UV-Härtung gelegt werden.

Diese Aufgabe wird gelöst durch einen Beschichtungsstoff mit einem Festkörpergehalt von mindestens 75 %, enthaltend als wesentliches Bindemittel ein UV-härtendes, fettsäurehaltiges Bindemittel, das erhältlich ist aus

| | | |
|---|---|---|
| a) | 35 bis 85 Gew.-% | Fettsäureester auf der Basis von ungesättigten Fettsäuren, |
| b) | 5 bis 25 Gew.-% | ungesättigtem Dicarbonsäureanhydrid, |
| c) | 5 bis 25 Gew.-% | einer hydroxyfunktionellen, vinylisch oder allylisch ungesättigten Verbindung, |
| d) | 0 bis 25 Gew.-% | eines Glycidylesters einer ungesättigten Monocarbonsäure, |

wobei die Summe der Komponenten a), b), c) und d) 100 Gew.-% beträgt, und daneben ggfs. organische Lösungsmittel und übliche Zusätze wie Pigmente, Füllstoffe, Hilfsstoffe, Fotoinitiatoren und Trockenstoffe.

Geeignete Fettsäureester können sowohl natürliche (Öle) als auch synthetisch hergestellte sein. Als Polykomponente können monofunktionelle Alkohole wie Methanol, Ethanol, Propanol usw., Diole wie Ethylenglykol, Neopentylglykol, Propylenglykol, Butandiole, 1,6-Hexandiol usw. sowie Polyole wie Glycerin, Trimethylolpropan, Trimethylolethan, Pentaerythrit usw. in Frage kommen. Als Fettsäurekomponente kommen solche ab 16 C-Atomen, insbesondere trocknende und/oder halbtrocknende Fettsäuren zum Einsatz. Dies können sowohl reine Fettsäuren wie Ölsäure, Linolsäure, Linolensäure als auch gemischte Fettsäuren wie Sojaölfettsäure, Sonnenblumenölfettsäure, Tallölfettsäure, Leinölfettsäure, Saflorölfettsäure sein. Anteilig können auch nichttrocknende Fettsäuren ab 6 C-Atomen, beispielsweise Kokosölfettsäure, Isononansäure, Ethylhexansäure u.a. und/oder Harzsäuren, wie Abietinsäuren mitverwendet werden.

Besonders bevorzugt ist es, wenn als Fettsäureester natürliche trocknende und/oder halbtrocknende Öle zum Einsatz kommen.

Als ungesättigtes Dicarbonsäureanhydrid wird Maleinsäureanhydrid (HSA) verwendet.

Als hydroxyfunktionelle vinylische oder allylische ungesättigte Verbindungen können ungesättigte Monoalkohole wie Allylalkohol, Crotylalkohol oder hydroxyfunktionelle Acrylate und/oder Methacrylate wie Hydroxyethylacrylat, Hydroxypropylacrylat, Hydroxyethylmethacrylat, Hydroxypropylmethacrylat zum Einsatz kommen.

Geeignete Glycidylester ungesättigter Monocarbonsäuren sind vor allem Glycidylacrylat und Glycidylmethacrylat.

In einem Verfahren zur Herstellung der erfindungsgemäßen Bindemittel werden zunächst 35 bis 85 Gew.-% Fettsäureester mit 5 bis 25 Gew.-% MSA bei Temperaturen von 170 bis 250°C, vorzugsweise 190 bis 220°C umgesetzt. Nach Abkühlen werden bei 60 bis 160°C, vorzugsweise bei 90 bis 140°C 5 bis 25 Gew.-% einer hydroxyfunktionellen ungesättigten Verbindung zugegeben. Danach erfolgt gegebenenfalls bei gleicher Temperatur die Zugabe von 0 bis 25 Gew.-% des Glycidylesters einer ungesättigten Monocarbonsäure.

Die Summe der Komponenten beträgt 100 Gew.-%. Gegebenenfalls kann ein Katalysator für die Anhydrid- und Epoxidaufspaltung verwendet werden. Hierfür sind verschiedene Katalysatoren wie Amine oder Zinnverbindungen bekannt, als besonders günstig hat sich dabei Triethylamin erwiesen.

Als Lösungsmittel können aliphatische, cycloaliphatische und aromatische Kohlenwasserstoffe, Ester, Glykolether und Alkohole allein oder im Gemisch eingesetzt werden. Die Erfindung ist umso interessanter, da sich die erfindungsgemäßen Bindemittel weitestgehend mit aliphatischen Kohlenwasserstoffen verdünnen lassen. Dies hat besonders im Hinblick auf den Umweltschutz erhebliche Bedeutung.

Durch Einsatz der erfindungsgemäßen Bindemittel ist es möglich, Beschichtungsstoffe mit einem hohen Festkörpergehalt und ohne Zusatz von Monomeren bei Applikationsviskosität herzustellen. Auch bei hohem Festkörper haben sie ein unerwartet hohes Penetrationsvermögen. Die erfindungsgemäßen Beschichtungsstoffe eignen sich insbesondere zur Beschichtung von Holzoberflächen und saugenden Untergründen. Der aufgetragene Beschichtungsstoff dringt nahezu vollständig in die Oberfläche ein und hinterläßt nach der UV-Härtung den gewünschten dekorativen Effekt, der die Struktur des Holzes oder sonstiger Untergründe erkennen läßt. Die Oberflächen sind völlig klebfrei, so daß ein Stapeln der beschichteten Objekte und Gegenstände sofort erfolgen kann.

Nachfolgend wird die Erfindung anhand von Beispielen näher erläutert.

### Beispiel 1

In einem 2 l-Dreihalskolben ausgerüstet mit Rührer, Temperaturregelung und absteigendem Kühler werden 900 g Sojaöl und 245 g MSA auf 200°C hochgeheizt und 5 Stunden bei dieser Temperatur gehalten. Danach wird auf 110°C abgekühlt, der absteigende Kühler zum Rückflußkühler umgebaut und 290 g 2-Hydroxyethylacrylat und 1 g Triethylamin zugegeben. Es wird 2 Stunden bei dieser Temperatur gehalten, anschließend 284 g Glycicylmethacrylat zugegeben und nochmals zwei Stunden gehalten. Das Reaktionsprodukt nat folgende Kennzahlen:

| | |
|---|---|
| Säurezahl | 11 mg KOH/g |
| Hydroxylzahl | 59 mg KOH/g |

### Beispiel 2

In einer Apparatur analog Beispiel 1 werden 672 g Leinölfettsäurebutylester mit 196 g MSA auf 190°C hochgeneizt und 5 Stunden gehalten. Es erfolgt Abkühlen auf 120°C und Zugabe von 288 g Hydroxypropylmethacrylat und 1 g Triethylamin. Nach einer Stunde werden 256 g Glycidylacrylat zugegeben und weitere zwei Stunden bei dieser Temperatur gehalten. Das Reaktionsprodukt hat folgende Kennzahlen:

| | |
|---|---|
| Säurezahl | 4 mg KOH/g |
| Hydroxylzahl | 87 mg KOH/g |

### Beispiel 3

In einer Apparatur analog Beispiel 1 werden 385 g Fettsäureester aus 1 Mol Ethylenglykol und 2 Mol Ölsäure mit 294 g MSA auf 220°C hochgeheizt und vier Stunden bei dieser Temperatur gehalten. Es wird auf 140°C abgekühlt und 390 g Hydroxypropylacrylat zugegeben. Das Reaktionsgemisch wird weitere 3 Stunden bei 140° gehalten. Das Reaktionsprodukt hat folgende Kennzahlen:

| | |
|---|---|
| Säurezahl | 87 mg KOH/g |
| Hydroxylzahl | 6 mg KOH/g |

### Anwendungsbeispiel A

Es werden 100 g Bindemittel des Beispiels 1 80%ig in Testbenzin gelöst und mit 4 Gew.-% (bezogen auf Festharz) handelsüblichem Fotoinitiator (Darocur ^{R} 1173 der Firma E. Merck) versetzt. Der Beschichtungsstoff wurde mit einem Rakel zu einem 30 mm dicken Film auf Buchenholzbrettchen aufgezogen. Nach kurzer Ablüftzeit werden die Brettchen auf einem Transportband mit regelbarer Bandgeschwindigkeit unter einem UV-Strahler gehärtet.

### Anwendungsbeispiel B

Es werden 100 g Bindemittel des Beispiels 2 mit 6 % Fotoinitiator gemäß Beispiel 1 versetzt und mit einem Rakel analog Anwendungsbeispiel A auf Buchenholzbrettchen aufgezogen und ausgehärtet.

In beiden Fällen war der Beschichtungsstoff nahezu vollständig in das Holz eingedrungen. Die Holzoberfläche wies nach der Härtung Klebfreiheit auf und zeigte den gewünschten dekorativen Effekt.

Bekannte UV-härtende Beschichtungsstoffe Wiesen dagegen - auch nach entsprechender Verdünnung - zumindest teilweise Filmbildung auf und konnten bezüglich der gewünschten dekorativen Oberflächengestaltung nicht befriedigen.

## Patentansprüche

1. Beschichtungsstoff mit einem Festkörpergehalt von mindestens 75 %, enthaltend als wesentliches Bindemittel ein UV-härtendes, fettsäurehaltiges Bindemittel, das erhältlich ist aus
| | | |
|---|---|---|
| a) | 35 bis 85 Gew.-% | Fettsäureester auf der Basis von ungesättigten Fettsäuren, |
| b) | 5 bis 25 Gew.-% | ungesättigtem Dicarbonsäureanhydrid, |
| c) | 5 bis 25 Gew.-% | einer hydroxyfunktionellen, vinylisch oder allylisch ungesättigten Verbindung, |
| d) | 0 bis 25 Gew.-% | eines Glycidylesters einer ungesättigten Monocarbonsäure, |
wobei die Summe der Komponenten a), b), c) und d) 100 Gew.-% beträgt, und daneben ggfs. organische Lösungsmittel und übliche Zusätze wie Pigmente, Füllstoffe, Hilfsstoffe, Fotoinitiatoren und Trockenstoffe.

2. Verwendung des Beschichtungsstoffs nach Anspruch 1 für die Beschichtung von Untergründen, insbesondere natürlichen oder künstlichen, porösen oder sauren Untergründen, u.a. Holz.

## Claims

1. Coating material with a solid content from at least 75 %, containing as essential binder a U.V. curable fatty acid-containing binder, which is obtainable from:-
a) 35 to 85wt % of fatty acid esters derived from unsaturated fatty acids,
b) 5 to 25wt % of unsaturated dicarboxylic acid anhydride,
c) 5 to 25wt % of a hydroxy functional, vinylically or allylically unsaturated compound,
d) 0 to 25wt % of a glycidyl ester of an unsaturated monocarboxylic acid whereby the sum of components a), b), c) and d) is equal to 100wt %, as well as, if necessary, organic solvents and conventional additives such as pigments, fillers, auxiliary materials, photo-initiators and drying agents.

2. Use of coating material according to claim 1 for the coating of substrates, in particular natural or artificial, porous or absorbent substrates, such as wood.

## Revendications

1. Matière d'enduction avec un taux de solides d'au moins 75% contenant comme liant essentiel un liant durcissant aux rayons U.V., contenant un acide gras, que l'on obtient à partir de
a) 35 à 85 % en poids d'ester d'acide gras à base d'acide gras non saturés,
b) 5 à 25 % en poids d'anhydride d'acide dicarbonique non saturé,
c) 5 à 25 % en poids d'un composé hydroxyfonctionnel non saturé vinylique ou allylique,
d) 0 à 25 % en poids d'un ester glycidylique d'un acide monocarboxylique non saturé,
la somme des composants a), b), c) et d) se montant à 100 % en poids et comportant en plus, le cas échéant, des solvants organiques et des additifs usuels comme des pigments, des matières de remplissage, des matières auxiliaires, des photoinitiateurs et des siccatifs.

2. Utilisation de la matière d'enduction selon la revendication 1 pour l'enduction de supports, en particulier de supports naturels ou artificiels, poreux ou acides, entre autres du bois.
